# EUROPEAN PATENT APPLICATION

(11) **EP 3 474 633 A2**
(43) Date of publication of application: **24.04.2019**
(21) Application number: 18198566.4
(22) Date of filing: 04.10.2018
(51) Int. Cl.: H05B 33/08

(54) **CONTROL SYSTEM FOR LED LAMPS**

(30) Priority: 18.10.2017 CN 201710978203
(71) Applicant: Self Electronics Co., Ltd., Ningbo City, Zhejiang 315103 (CN); SELF ELECTRONICS Germany GmbH, 51149 Köln (DE); Lin, Wanjiong, Ningbo City, Zhejiang 315103 (CN)
(72) Inventor: YOU, Xiaobo, Ningbo 315103 (CN); ZHAO, Pengyuan, Ningbo 315103 (CN)
(74) Representative: 2K Patentanwälte Blasberg Kewitz & Reichel

(57) **Abstract**

A control system for LED lamps, which is used to control at least one LED lamp, each LED lamp comprises at least one color type of LED chip. The control system of the LED lamp comprises a lamp coding module, a chip coding module, a lamp query module and a lamp control module. Each LED lamp is assigned a different lamp address code. Each LED chip with different color types in the LED lamp is assigned a different chip address code, and the same chip address code is assigned to the LED chip with the same color type in the LED lamp. The query instruction is composed of lamp address code and query command code, and the control instruction is composed of lamp address code, chip address code and control command code. The number of bytes of instruction coded in the technical scheme of this application will be greatly reduced, which is not only conducive to reducing the difficulty of coding, but also beneficial to shortening the number of bytes encoded and improving the operation efficiency.

## Description

### CROSS-REFERENCE TO A RELATED APPLICATION

This application claims priority to a Chinese Patent Application No. CN 201710978203.1, filed on October 18, 2017.

### FIELD OF THE TECHNOLOGY

The present invention relates to lighting field, with particular emphasis on a control system for LED lamps.

### BACKGROUND

In general daily life, various lighting devices can be seen everywhere, such as fluorescent lamps, street lamps, table lamps, art lamps, and the like. In the above lighting apparatus, a tungsten filament bulb is conventionally used as a light source. In recent years, due to the rapid development of technology, light-emitting diodes (LEDs) have been used as sources of illumination. In addition, in addition to lighting equipment, for general traffic signs, billboards, lights, etc., also use LEDs as a light source. As mentioned above, the use of light-emitting diodes as light-emitting sources has the advantages of power saving and greater brightness, so it has gradually become common in use.

With the popularity of LED lamps, more and more occasions have begun to use LED lamps. Due to the development of LED chip technology, different LED chips can emit different colors of light by adding different phosphors to the LED chips. In order to control or query different lamps, and to control or query different color chips in different lamps, it is necessary to encode different lamps and different color chips for easy controller or user identification. Usually, when the user encodes different lamps and different color chips in different lamps, it is usually one lamp has one code, which comprises the lamp information and the color chip information, this makes the coding of each lamp longer, thus making the controller and others run slower and take longer, which is not conducive to improving efficiency.

### SUMMARY OF THE INVENTION

Therefore, the present invention provides a control system for an LED lamp that can improve the control efficiency of the lamp to solve the above problem.

A control system for LED lamps for controlling at least one LED lamp, each of the LED lamps comprising at least one color type of LED chip, the control system of the LED lamp comprises a lamp encoding module, a chip encoding module, a lamp query module, and a lamp control module, the lamp encoding module is configured to assign a different lamp address code to each of the LED lamps, the chip encoding module is configured to assign a different chip address code to each of the LED chips in different color types in the LED lamp, and assign the same chip address code to the LED chips in the same color type in the LED lamp, the lamp query module is configured to issue a query instruction for querying the working status of any one of the LED lamps, the query command is composed of a lamp address code and a query command code, and the lamp control module is configured to issue a control command for controlling an operation state of each color type of the LED chip in any one of the LED lamps, the control instruction is composed of a lamp address code, a chip address code, and a control command code.

Advantageously, the color types of the LED chips comprise red, green, blue, white, and orange.

Advantageously, the control system of the LED lamp further comprises a lamp response module, and the lamp response module is configured to reply the working state of the LED lamp corresponding to the lamp address code according to the query instruction of the lamp query module.

Advantageously, the query command code comprises a color type of an LED chip comprised in the LED lamp, a current and a voltage flowing through the LED lamp.

Advantageously, the control command code comprises controlling a voltage applied to an LED chip of each color type of any one of the LED lamps or a current flowing through.

Advantageously, the control system of the LED lamp further comprises a lamp failure alarm module, and when the LED chip of any one of the LED lamps fails, the lamp address code of the failed LED lamp is returned.

Advantageously, any one of the lamp addresses is encoded as a two-byte data.

Advantageously, the chip address in any color type is encoded as a two-byte data.

Compared with the prior art, one lamp has one code, which makes the coding of various instructions long, which makes the running data very slow, because each lamp is composed of lamp address coding, instruction coding, and chip coding. If there are three lamps, and each code is assumed to be 2 bytes, the chip has only one color, whether it is a query command or a control command, the command code is at least 18 bytes, and if the technical solution of the present application is used, If it's a control instruction, there are 18 bytes if each chip is different, and if all are the same, there are only 14 words, or up to 18 bytes. And if it is a query instruction, there are only 12 bytes. If the color type of the chip is more time, the number of instruction code bytes compiled by the technical solution of the present application will be greatly reduced, which not only helps to reduce the coding difficulty of the user, but also helps to shorten the number of encoded bytes, and will improve the operation efficiency.

### DETAILED DESCRIPTION OF THE DRAWINGS

The drawings described herein are intended to promote a further understanding of the present invention, as follows:

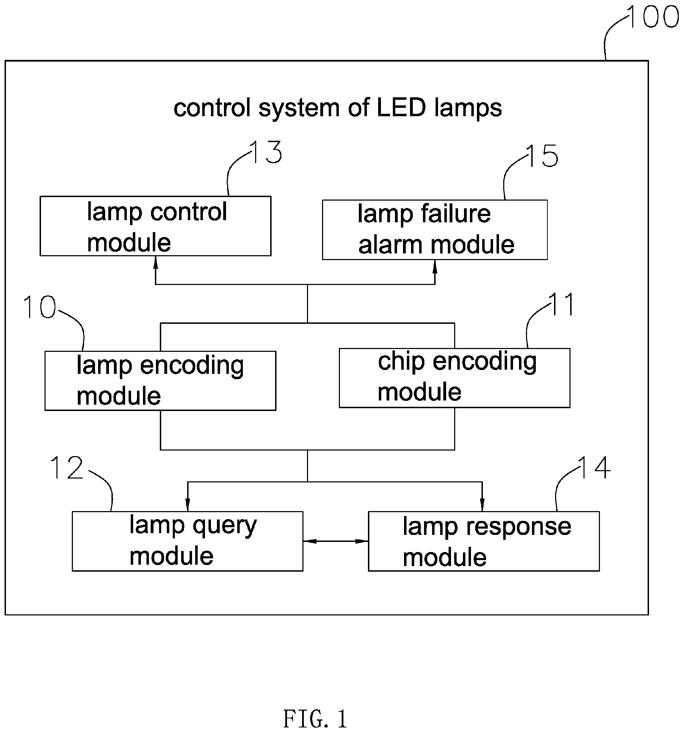

FIG. 1 is a schematic block diagram of a control system for LED lamps provided by the present invention.

### DESCRIPTION OF THE PREFERRED EMBODIMENTS

The present application is illustrated by way of the following detailed description based on of the accompanying drawings. It should be noted that illustration to the embodiment in this application is not intended to limit the invention.

Please refer to FIG.1, which is a schematic structural diagram of a control system 100 for LED lamps provided by the present invention. It is well known that the control system 100 of the LED lamp typically comprises at least one LED lamp, at least one lamp power supply for powering the LED lamp, at least one controller for controlling the output of the lamp power supply, and at least one user command input device controlling the output of the controller. Each of the LED lamps comprises at least one color type of LED core, and it is well known that the color types of the LED chips comprise red, green, blue, white, and orange. The lamp power supply supplies power such as current or voltage to each color type of LED chip of the LED lamp, and by changing the magnitude of the current or voltage, the light emitted by the LED chip of each color type can be changed. The controller controls the output of the lamp power supply by a signal such as a PWM signal. Finally, the user command input device is controlled by the user to input a command code according to his own needs to control the output of the controller. The user command input device identifies the LED lamp to be controlled and the LED chip in the LED lamp by first encoding each LED lamp and each color type of LED chip in each LED lamp, according to which that is, each LED lamp and each color type of LED chip in each LED lamp can be distinguished. However, because the above control technology is a common technique of current lighting control methods, it will not be described in detail here.

The control system 100 of the LED lamp is used to control at least one LED lamp, and comprises a lamp encoding module 10, a chip encoding module 11, a lamp query module 12, and a lamp control module 13. It is conceivable that the control system 100 of the LED lamp further comprises other functional modules, such as a display module, a command input module, a data transmission module, etc., which should be known to those skilled in the art, it will not be repeated here. In addition, it can be understood that each of the above modules can be completed by a computer program. Of course, as long as the technical solutions of the present application are known in the art, the functions of the above modules can be written by using the existing programming language. Therefore, as far as the above programming language is concerned, the programming language is not described here.

The lamp encoding module 10 is configured to assign a different lamp address code to each of the LED lamps. Each of the LED lamps is given an address code by the lamp encoding module 10, such as a natural number or a large letter. To make the encoding shorter, any of the lamp addresses are encoded as a two-byte data. In this embodiment, the address code given to each of the LED lamps by the lamp encoding module 10 is a natural number. When the lamp encoding module 10 encodes each of the LED lamps, it is only coded according to the number of LED lamps, regardless of whether the types of the LED lamps are the same.

The chip encoding module 11 is configured to assign a different chip address code to each of the LED chips of different color types in the LED lamp, and assign the same chip address code to the LED chips of the same color type in the LED lamp. Because the color types of LED chips used in LED lamps generally comprise red, green, blue, white, and orange colors, and then the address codes of these LED chips with different color can be replaced by letters, such as the five letters R, G, B, W, and O , such that the chip address of any color type is encoded as one two-byte data. The chip encoding module 11 is distinguished only according to the color of the LED chip, that is, chips of different colors are assigned different addresses, and chips of the same color are given the same address, and it will not involve whether these LED chips with different colors or the same color belong to the same LED lamp.

The lamp query module 12 is configured to issue a query instruction for querying the working status of any LED lamp, the query command being composed of a lamp address code and a query command code. That is to say, the query instruction does not involve address coding of LED chips with the same or different color types. The query command code comprises a query for a color type of an LED chip comprised in the LED lamp, a current flowing through the LED lamp, a voltage, and the like.

Since the control system 100 of the LED lamp has the lamp query module 12, it also comprises a lamp response module 14. The lamp response module 14 is configured to reply to the working state of the LED lamp corresponding to the lamp address code according to the query instruction of the lamp query module 12, such as the color type, current, voltage, etc. of the LED chip.

The lamp control module 13 is configured to issue a control command for controlling an operating state of each color type of the LED chip in any one of the LED lamps, the control command being composed of a lamp address code, a chip address code, and a control command code. That is, when it is necessary to control an LED lamp, it is necessary to write a control command consisting of a lamp address code, a chip address code, and a control command code to complete the user's control needs. The control command code comprises controlling a voltage applied on an LED chip with each color type of any one of the LED lamps or a current flowing through there, so that the output of each color type of the LED chip can be controlled, thereby controlling the output of each one of the LED lamps.

The control system 100 of the LED lamp also comprises a lamp failure alarm module 15. The lamp failure alarm module 15 returns the lamp address code of the failed LED lamp when any one of the LED chips fails. Understandably, when an LED lamp fails, the user only needs to know which LED lamp has failed, without knowing more details, so only need to know the lamp address code of the failed LED lamp.

Compared with the prior art, one lamp has one code, which makes the coding of various instructions long, which makes the running data very slow, because each lamp is composed of lamp address coding, instruction coding, and chip coding. If there are three lamps, and each code is assumed to be 2 bytes, the chip has only one color, whether it is a query command or a control command, the command code is at least 18 bytes, and if the technical solution of the present application is used, If it's a control instruction, there are 18 bytes if each chip is different, and if all are the same, there are only 14 words, or up to 18 bytes. And if it is a query instruction, there are only 12 bytes. If the color type of the chip is more time, the number of instruction code bytes compiled by the technical solution of the present application will be greatly reduced, which not only helps to reduce the coding difficulty of the user, but also helps to shorten the number of encoded bytes, and will improve the operation efficiency.

The above disclosure has been described by way of example and in terms of exemplary embodiment, and it is to be understood that the disclosure is not limited thereto. Rather, any modifications, equivalent alternatives or improvement etc. within the spirit of the invention are encompassed within the scope of the invention as set forth in the appended claims.

## Claims

1. A control system (100) for LED lamps, for controlling at least one LED lamp, each of the LED lamps comprising at least one color type of LED chip, **characterized in that**: the control system of the LED lamp comprises a lamp encoding module (10), a chip encoding module (11), a lamp query module (12), and a lamp control module (13), the lamp encoding module (10) being configured to assign a different lamp address code to each of the LED lamps, the chip encoding module (11) being configured to assign a different chip address code to each of the LED chips in different color types in the LED lamp, and assign the same chip address code to the LED chips in the same color type in the LED lamp, the lamp query module (12) being configured to issue a query instruction for querying the working status of any one of the LED lamps, the query command being composed of a lamp address code and a query command code, and the lamp control module (13) being configured to issue a control command for controlling an operation state of each color type of the LED chip in any one of the LED lamps, the control instruction being composed of a lamp address code, a chip address code, and a control command code.

2. The control system for LED lamps as claimed in claim 1, wherein the color types of the LED chips comprise red, green, blue, white, and orange.

3. The control system for LED lamps as claimed in claim 1 or 2, wherein the control system for LED lamps further comprises a lamp response module, and the lamp response module is configured to reply the working state of the LED lamp corresponding to the lamp address code according to the query instruction of the lamp query module.

4. The control system for LED lamps as claimed in one of the preceding claims, wherein the query command code comprises a color type of an LED chip comprised in the LED lamp, a current and a voltage flowing through the LED lamp.

5. The control system for LED lamps as claimed in one of the preceding claims, wherein the control command code comprises controlling a voltage applied to an LED chip of each color type of any one of the LED lamps or a current flowing through.

6. The control system for LED lamps as claimed in one of the preceding claims, wherein the control system for LED lamps further comprises a lamp failure alarm module, and when the LED chip of any one of the LED lamps fails, the lamp address code of the failed LED lamp is returned.

7. The control system for LED lamps as claimed in one of the preceding claims, wherein any one of the lamp addresses is encoded as a two-byte data.

8. The control system for LED lamps as claimed in one of the preceding claims, wherein the chip address in any color type is encoded as a two-byte data.
